# EUROPÄISCHE PATENTSCHRIFT

(11) **EP 2 706 263 B1**
(45) Veröffentlichungstag und Bekanntmachung des Hinweises auf die Patenterteilung: **10.10.2018**
(21) Anmeldenummer: 13181127.5
(22) Anmeldetag: 21.08.2013
(51) Int. Cl.: F16F 15/14, F16F 15/139

(54) **Drehmomentübertragungseinrichtung**
Torque transmission device
Dispositif de transmission de couple

(30) Priorität: 06.09.2012 DE 102012215842
(43) Veröffentlichungstag der Anmeldung: 12.03.2014
(73) Patentinhaber: Schaeffler Technologies AG & Co. KG, 91074 Herzogenaurach (DE)
(72) Erfinder: Maienschein, Stephan, 76534 Baden-Baden (DE); Güllük, Toros, 77839 Lichtenau (DE)

(56) Entgegenhaltungen:
- WO-A1-2009/152800
- WO-A1-2011/100945

## Beschreibung

Die Erfindung betrifft eine Drehmomentübertragungseinrichtung nach dem Oberbegriff von Anspruch 1.
Derartige Drehmomentübertragungseinrichtungen sind allgemein bekannt. So zeigt WO2010037661 eine Drehmomentübertragungseinrichtung umfassend eine nasslaufende Kupplung mit einer Reibeinrichtung zum lösbaren Verbinden eines Kupplungseingangsteils mit einem Kupplungsausgangsteil und einen Drehschwingungsdämpfer mit einem Dämpfereingangsteil und einem gegenüber diesem entgegen der Wirkung von Energiespeicherelementen begrenzt verdrehbaren Dämpferausgangsteil, sowie eine Fliehkraftpendeleinrichtung mit einem Pendelmassenträger und beidseitig daran aufgenommenen Pendelmassen.
Aus der WO2009152799 ist eine nasse Doppelkupplung mit einem Drehschwingungsdämpfer bekannt. Dabei ist das Dämpferausgangsteil drehfest mit dem Kupplungseingangsteil verbunden. Das Dokument WO 2009/152800 A1 zeigt eine Drehmomentübertragungseinrichtung mit den Merkmalen des Oberbegriffs des Anspruchs 1.

Dabei sind die Pendelmassen radial außerhalb der Energiespeicherelemente des Drehschwingungsdämpfers angeordnet. Dadurch kann die Dämpferkapazität nicht voll ausgeschöpft werden, da die Energiespeicherelemente auf einem verhältnismäßig zu der radialen Gesamtabmessung der Kupplung kleinen Radius wirksam sind.
Die Aufgabe liegt darin, eine verbesserte Drehschwingungsdämpfung zu bewirken. Weiterhin kann die Aufgabe auch darin bestehen, den radialen Bauraumbedarf zu verringern.
Die Aufgabe wird durch alle Merkmale des Gegenstands gemäß Anspruch 1 gelöst.
Dementsprechend wird eine Drehmomentübertragungseinrichtung, umfassend eine als Anfahrkupplung ausgebildete nasslaufende Kupplungseinrichtung, aufweisend eine Drehachse, eine Reibeinrichtung zum lösbaren Verbinden eines Kupplungseingangsteils mit einem Kupplungsausgangsteil, ein Kolbenelement zur Bewirkung eines Reibeingriffs zwischen dem Kupplungseingangsteil und dem Kupplungsausgangsteil, einen Drehschwingungsdämpfer mit einem Dämpfereingangsteil und einem gegenüber diesem entgegen der Wirkung wenigstens eines Energiespeicherelements begrenzt verdrehbaren Dämpferausgangsteil und eine Tilgereinrichtung zur Tilgung von Drehschwingungen, umfassend einen Tilgermassenträger und eine daran aufgenommene Tilgermasse vorgeschlagen, wobei die Tilgermasse und das Energiespeicherelement in Bezug auf die Drehachse radial überlappend angeordnet sind. Dadurch kann eine verbesserte und effiziente Drehschwingungsdämpfung bewirkt werden. Auch kann dadurch der radiale Bauraumbedarf verringert werden.

Zwei Bauteile sind radial überlappend zueinander angeordnet, wenn das erste Bauteil das zweite Bauteil wenigstens abschnittsweise radial überlappt und/oder ein radialer Endbereich des ersten Bauteils und einen radialer Endbereich des zweiten Bauteils radial auf gleicher Höhe angeordnet sind.

In einer weiteren vorteilhaften speziellen Ausgestaltung der Erfindung liegt ein radial äußerster Umfang des Energiespeicherelements radial weiter aussen als oder auf gleicher Höhe wie der radial äußerste Umfang der Tilgermasse.

In einer weiteren speziellen Ausführungsform der Erfindung ist der Tilgermassenträger mit dem Dämpfereingangsteil drehfest verbunden oder einteilig mit diesem ausgeführt. Auch kann der Tilgermassenträger mit dem Dämpferausgangsteil drehfest verbunden oder einteilig mit diesem ausgeführt sein.

In einer speziellen Ausgestaltung der Erfindung ist das Dämpferausgangsteil drehfest mit einer Abtriebsnabe verbindbar oder über die Wirkung eines weiteren Energiespeicherelements unter Ausbildung einer weiteren Dämpferstufe gegenüber einem weiteren Dämpferausgangsteil begrenzt verdrehbar.

In einer weiteren bevorzugten Ausgestaltung der Erfindung ist die Tilgereinrichtung als Fliehkraftpendeleinrichtung ausgebildet ist und somit der Tilgermassenträger als Pendelmassenträger und die Tilgermasse als beidseitig an dem Pendelmassenträger angeordnete und gegenüber diesem verlagerbare Pendelmassen ausgebildet ist.

In einer weiteren speziellen Ausgestaltung der Erfindung sind die Pendelmassen mit durch den Pendelmassenträger durchgreifenden Abstandsbolzen miteinander verbunden und über in dem Pendelmassenträger aufgenommene Abrollelemente gegenüber dem Pendelmassenträger entlang einer Pendellaufbahn begrenzt verlagerbar.

In einer weiteren vorteilhaften speziellen Ausgestaltung der Erfindung weist das Kupplungseingangsteil antriebsseitige Reiblamellen und das Kupplungsausgangsteil abtriebsseitige Reiblamellen auf und das Kolbenelement ist zur Beaufschlagung der Reiblamellen in Richtung zu dem antriebsseitigen Kupplungsgehäuse verlagerbar.

Vorzugsweise ist benachbart zu der Reibeinrichtung ein mit dem Kupplungsgehäuse drehfest verbundenes Wandelement angeordnet und die Reiblamellen sind axial zwischen dem Wandelement und dem Kupplungsgehäuse angeordnet. Insbesondere bildet das Wandelement eine Begrenzung für einen Druckraum zur druckabhängigen Verlagerung des Kolbenelements zur Beaufschlagung der Reiblamellen.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.
Die Erfindung wird im Folgenden unter Bezugnahme auf die Abbildungen im Speziellen beschrieben. Es zeigen im Einzelnen:

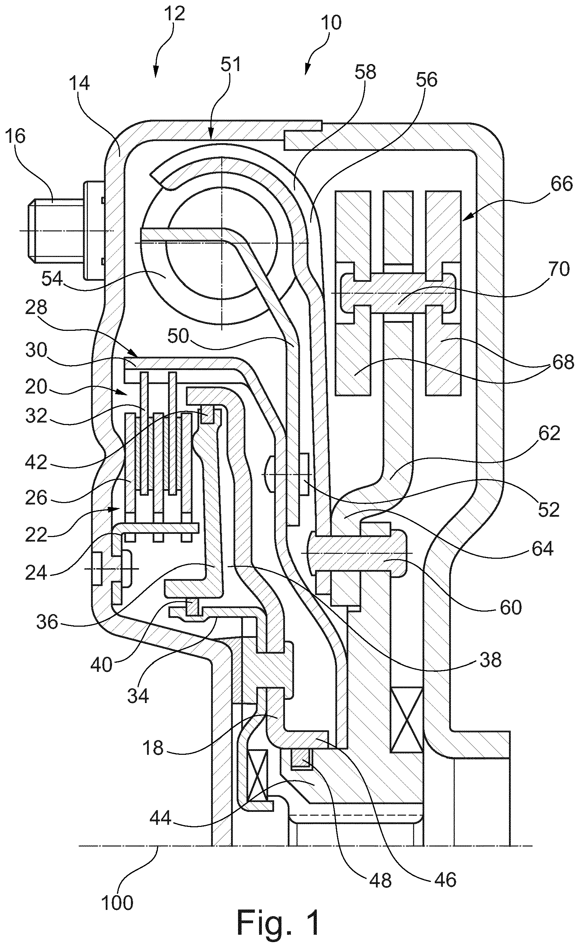

- Figur 1:: Querschnitt eines Ausschnitts einer Drehmomentübertragungseinrichtung in einer speziellen Ausführungsform der Erfindung.

Figur 1 zeigt einen Querschnitt eines Ausschnitts einer Drehmomentübertragungseinrichtung 10 in einer speziellen Ausführungsform der Erfindung. Bestandteil der Drehmomentübertragungseinrichtung 10 bildet eine als Anfahrkupplung ausgebildete und um eine Drehachse 100 drehbare nasslaufende Kupplungseinrichtung 12, die von einem zweiteilig ausgebildeten Kupplungsgehäuse 14 umschlossen wird, worin ein Fluid aufgenommen ist. Das Kupplungsgehäuse 14 ist mit einem Mitnehmerelement 16 mit einer Antriebsseite verbindbar. Das Mitnehmerelement 16 ist an dem Kupplungsgehäuse 14 befestigt, insbesondere verschweißt oder vernietet.

In dem Kupplungsgehäuse 14 ist ein Wandelement 18 eingebracht, das mit dem Kupplungsgehäuse 16 drehfest verbunden ist, insbesondere vernietet ist. Zwischen diesem Wandelement 18 und dem Kupplungsgehäuse 14 ist eine Reibeinrichtung 20 angeordnet, die ein Kupplungseingangsteil 22, bestehend aus einem Lamellenträger 24 und antriebsseitigen Reiblamellen 26 aufweist, wobei der Lamellenträger 24 mit dem Kupplungsgehäuse 14 drehfest verbunden ist, insbesondere mit dem Kupplungsgehäuse 14 vernietet ist.

Weiterhin ist ein Kupplungsausgangsteil 28 vorgesehen, das durch einen weiteren Lamellenträger 30, hier einem Aussenlamellenträger und abtriebsseitigen Reiblamellen 32 gebildet wird. Die antriebsseitigen Reiblamellen 26 und abtriebsseitigen Reiblamellen 32 können reibschlüssig miteinander verbunden werden oder voneinander gelöst werden. Dazu können vorzugsweise die antriebsseitigen Reiblamellen 26 durch ein auf einem Stützelement 34 aufgenommenes und darauf axial verlagerbares Kolbenelement 36 mit einer Kraft beaufschlagt werden.

Auf einer den Reiblamellen 26, 32 abgewandten Seite des Kolbenelements 36 wird ein Druckraum 38 gebildet, indem das Kolbenelement 36 gegenüber dem Stützelement 34 und dem Wandelement 18 mittels jeweils einem Dichtelement 40, 42 abgedichtet ist. Der Druckraum 38 ist an eine durch das Wandelement 18 und/oder das Stützelement 34 verlaufende Öffnung an eine Fluidleitung angebunden, so dass eine axiale Verschiebung des Kolbenelements 36 in Abhängigkeit eines Fluiddrucks in dem Druckraum 38 bewirkt werden kann.

Das Wandelement 18 bildet in einem radial innen liegenden Bereich eine Zentrierung für eine mit einer Getriebeeingangswelle verbindbaren Abtriebsnabe 44, vorzugsweise weist das Wandelement 18 hierfür einen axialen Abschnitt 46 auf, womit zudem mittels eines Dichtelements 48 eine Abdichtung gegenüber der Abtriebsnabe 44 bewirkt werden kann.

Auch hat das Wandelement 18 eine strömungslenkende Wirkung, denn ein durch die Reibeinrichtung 20 strömendes Fluid, beispielsweise zur Kühlung der Reibeinrichtung 20, ist durch die Ausbildung und Anordnung des Wandelements 18 gezwungen, die Reibeinrichtung 20 zu durchströmen, und kann diese nicht wesentlich umgehen, womit eine effiziente Kühlung der Reibeinrichtung 20 bewirkt werden kann.

Der abtriebsseitige Lamellenträger 30 umgreift das Wandelement 18 und ist nach radial innen verlängert und auf der Abtriebsnabe 44 aufgenommen. An dem Lamellenträger 30 ist ein Dämpfereingangsteil 50 eines Drehschwingungsdämpfers 51 drehfest angebunden, beispielsweise über eine Nietverbindung 52. Das Dämpfereingangsteil 50 dient der Beaufschlagung von Energiespeicherelementen 54, die die Einleitungskraft auf ein gegenüber dem Dämpfereingangsteil 50 begrenzt verdrehbares Dämpferausgangsteil 56 weiterleiten können, wozu auch das Dämpferausgangsteil 56 in Eingriff mit den Energiespeicherelementen 54 steht.

Das Dämpferausgangsteil 56 dient zugleich der Ausnahme und Sicherung der Energiespeicherelemente 54 mittels eines Retainers 58. Das Dämpferausgangsteil 56 ist mit Hilfe einer Nietverbindung 60 mit der Abtriebsnabe 44 verbunden. Zwischen dem Dämpferausgangsteil 56 und der Abtriebsnabe 44 ist ein Tilgermassenträger 62, insbesondere ein Pendelmassenträger 64 einer Fliehkraftpendeleinrichtung 66 angeordnet und drehfest mit dem Dämpferausgangsteil 56 verbunden.

Der Pendelmassenträger 64 erstreckt sich von der Anbindungsstelle nach radial aussen und nimmt in einem radial äußeren Bereich axial beidseitig Pendelmassen 68 auf, die über Abstandsbolzen 70 miteinander verbunden sind. Die Abstandsbolzen 70 greifen hierzu durch entsprechende Ausschnitte in dem Pendelmassenträger 64 durch. Die Pendelmassen 68 sind über in dem Pendelmassenträger 64 aufgenommene Abrollelemente gegenüber dem Pendelmassenträger 64 entlang einer Pendellaufbahn begrenzt verlagerbar ist. Dadurch kann eine drehzahlabhängige Tilgung von Drehschwingungen bewirkt werden.

Die Fliehkraftpendeleinrichtung 66 ist axial benachbart zu dem Drehschwingungsdämpfer 51 angeordnet. Die Pendelmassen 68 und die Energiespeicherelemente 54 sind in Bezug auf die Drehachse 100 radial überlappend angeordnet. Dadurch kann die Drehschwingungsdämpfung verbessert werden, da die Energiespeicherelemente 54 auf einem grösseren Wirkradius angeordnet werden können.

### Bezugszeichenliste

- 10: Drehmomentübertragungseinrichtung
- 12: Kupplungseinrichtung
- 14: Kupplungsgehäuse
- 16: Mitnehmerelement
- 18: Wandelement
- 20: Reibeinrichtung
- 22: Kupplungseingangsteil
- 24: Lamellenträger
- 26: Reiblamellen
- 28: Kupplungsausgangsteil
- 30: Lamellenträger
- 32: Reiblamellen
- 34: Stützelement
- 36: Kolbenelement
- 38: Druckraum
- 40: Dichtelement
- 42: Dichtelement
- 44: Abtriebsnabe
- 46: Abschnitt
- 48: Dichtelement
- 50: Dämpfereingangsteil
- 51: Drehschwingungsdämpfer
- 52: Nietverbindung
- 54: Energiespeicherelement
- 56: Dämpferausgangsteil
- 58: Retainer
- 60: Nietverbindung
- 62: Tilgermassenträger
- 64: Pendelmassenträger
- 66: Fliehkraftpendeleinrichtung
- 68: Pendelmassen
- 70: Abstandsbolzen

- 100: Drehachse

## Patentansprüche

1. Drehmomentübertragungseinrichtung (10) umfassend eine als Anfahrkupplung ausgebildete nasslaufende Kupplungseinrichtung (12), aufweisend:
ein antriebsseitiges Kupplungsgehäuse (14);
eine Drehachse (100);
eine Reibeinrichtung (20) zum lösbaren Verbinden eines Kupplungseingangsteils (22) mit einem Kupplungsausgangsteil (28);
ein Kolbenelement (36) zur Bewirkung eines Reibeingriffs zwischen dem Kupplungseingangsteil (22) und dem Kupplungsausgangsteil (28);
einen Drehschwingungsdämpfer (51) mit einem Dämpfereingangsteil (50) und einem gegenüber diesem entgegen der Wirkung wenigstens eines Energiespeicherelements (54) begrenzt verdrehbaren Dämpferausgangsteil (56);
eine Tilgereinrichtung (66) zur Tilgung von Drehschwingungen, umfassend einen Tilgermassenträger (62, 64) und eine daran aufgenommene Tilgermasse (68), wobei die Tilgermasse (68) und das Energiespeicherelement (54) in Bezug auf die Drehachse (100) radial überlappend angeordnet sind, wobei das Kupplungseingangsteil (22) antriebsseitige Reiblamellen (26) und das Kupplungsausgangsteil (28) abtriebsseitige Reiblamellen (32) aufweist und das Kolbenelement (36) zur Beaufschlagung der Reiblamellen (26, 32) in Richtung zu dem antriebsseitigen Kupplungsgehäuse (14) verlagerbar ist, wobei benachbart zu der Reibeinrichtung (20) ein Wandelement (18) angeordnet ist und die Reiblamellen (26, 32) axial zwischen dem Wandelement (18) und dem Kupplungsgehäuse (14) angeordnet sind, wobei das Wandelement (18) eine Begrenzung für einen Druckraum (38) zur druckabhängigen Verlagerung des Kolbenelements (36) zur Beaufschlagung der Reiblamellen (26, 32) bildet, **dadurch gekennzeichnet, dass** das Wandelement (18) mit dem Kupplungsgehäuse (14) drehfest verbunden ist.

2. Drehmomentübertragungseinrichtung (10) nach Anspruch 1, wobei ein radial äußerster Umfang des Energiespeicherelements (54) radial weiter aussen liegt als oder auf gleicher Höhe liegt wie der radial äußerste Umfang der Tilgermasse (68).

3. Drehmomentübertragungseinrichtung (10) nach einem der Ansprüche 1 oder 2, wobei der Tilgermassenträger (62, 64) mit dem Dämpfereingangsteil (50) drehfest verbunden oder einteilig mit diesem ausgeführt ist.

4. Drehmomentübertragungseinrichtung (10) nach einem der Ansprüche 1 oder 2, wobei der Tilgermassenträger (62, 64) mit dem Dämpferausgangsteil (56) drehfest verbunden oder einteilig mit diesem ausgeführt ist.

5. Drehmomentübertragungseinrichtung (10) nach einem der Ansprüche 1 bis 4, wobei das Dämpferausgangsteil drehfest mit einer Abtriebsnabe verbindbar oder über die Wirkung eines weiteren Energiespeicherelements unter Ausbildung einer weiteren Dämpferstufe gegenüber einem weiteren Dämpferausgangsteil begrenzt verdrehbar ist.

6. Drehmomentübertragungseinrichtung (10) nach einem der vorangehenden Ansprüche, wobei die Tilgereinrichtung (66) als Fliehkraftpendeleinrichtung (66) ausgebildet ist und somit der Tilgermassenträger (62) als Pendelmassenträger (64) und die Tilgermasse als beidseitig an dem Pendelmassenträger (64) angeordnete und gegenüber diesem verlagerbare Pendelmassen (68) ausgebildet ist.

7. Drehmomentübertragungseinrichtung (10) nach Anspruch 6, wobei die Pendelmassen (68) mit durch den Pendelmassenträger (64) durchgreifenden Abstandsbolzen (70) miteinander verbunden und über in dem Pendelmassenträger (64) aufgenommene Abrollelemente gegenüber dem Pendelmassenträger (64) entlang einer Pendellaufbahn begrenzt verlagerbar sind.

## Claims

1. Torque transmission device (10) comprising a wetrunning clutch device (12) which is configured as a start-up clutch, having:
a drive-side clutch housing (14);
a rotational axis (100);
a frictional device (20) for releasably connecting a clutch input part (22) to a clutch output part (28);
a piston element (36) for bringing about a frictional engagement between the clutch input part (22) and the clutch output part (28);
a torsional vibration damper (51) with a damper input part (50) and a damper output part (56) which can be rotated to a limited extent with respect to the said damper input part (50) counter to the action of at least one energy store element (54);
an absorber device (66) for absorbing torsional vibrations, comprising an absorber mass carrier (62, 64) and an absorber mass (68) which is received thereon,
the absorber mass (68) and the energy store element (54) being arranged in a radially overlapping manner in relation to the rotational axis (100), the clutch input part (22) having drive-side friction discs (26), and the clutch output part (28) having output-side friction discs (32), and it being possible for the piston element (36) to be moved in order to load the friction discs (26, 32) in the direction of the drive-side clutch housing (14), a wall element (18) being arranged adjacently with respect to the frictional device (20), and the friction discs (26, 32) being arranged axially between the wall element (18) and the clutch housing (14), the wall element (18) forming a boundary for a pressure space (38) for the pressure-dependent movement of the piston element (36) in order to load the friction discs (26, 32), **characterized in that** the wall element (18) is connected fixedly to the clutch housing (14) so as to rotate with it.

2. Torque transmission device (10) according to Claim 1, a radially outermost circumference of the energy store element (54) lying radially further to the outside than or lying at the same level as the radially outermost circumference of the absorber mass (68).

3. Torque transmission device (10) according to either of Claims 1 and 2, the absorber mass carrier (62, 64) being connected fixedly to the damper input part (50) so as to rotate with it or being configured in one piece with the latter.

4. Torque transmission device (10) according to either of Claims 1 and 2, the absorber mass carrier (62, 64) being connected fixedly to the damper output part (56) so as to rotate with it or being configured in one piece with the latter.

5. Torque transmission device (10) according to one of Claims 1 to 4, it being possible for the damper output part to be connected fixedly to an output hub so as to rotate with it, or for it to be rotated to a limited extent with respect to a further damper output part via the action of a further energy store element, with the configuration of a further damper stage.

6. Torque transmission device (10) according to one of the preceding claims, the absorber device (66) being configured as a centrifugal force pendulum device (66), and the absorber mass carrier (62) therefore being configured as a pendulum mass carrier (64) and the absorber mass being configured as pendulum masses (68) which are arranged on both sides on the pendulum mass carrier (64) and can be moved with respect to the latter.

7. Torque transmission device (10) according to Claim 6, the pendulum masses (68) being connected to one another by way of spacer pins (70) which reach through the pendulum mass carrier (64), and it being possible for the said pendulum masses (68) to be moved to a limited extent along a pendulum running track with respect to the pendulum mass carrier (64) via rolling elements which are received in the pendulum mass carrier (64).

## Revendications

1. Dispositif de transmission de couple (10), comprenant un dispositif d'embrayage humide (12) constitué par un embrayage de démarrage, présentant :
un boîtier d'embrayage côté entraînement (14);
un axe de rotation (100);
un dispositif de friction (20) pour la liaison séparable d'une partie d'entrée d'embrayage (22) avec une partie de sortie d'embrayage (28);
un élément de piston (36) pour opérer un engagement de friction entre la partie d'entrée d'embrayage (22) et la partie de sortie d'embrayage (28);
un amortisseur de vibrations de torsion (51) avec une partie d'entrée d'amortisseur (50) et une partie de sortie d'amortisseur (56) pouvant tourner de façon limitée par rapport à celle-ci contre l'action d'au moins un élément d'accumulation d'énergie (54);
un dispositif d'atténuation (66) pour atténuer des vibrations de torsion, comprenant un support de masse d'atténuation (62, 64) et une masse d'atténuation (68) montée sur celui-ci,
dans lequel la masse d'atténuation (68) et l'élément d'accumulation d'énergie (54) sont disposés avec chevauchement radial par rapport à l'axe de rotation (100), dans lequel la partie d'entrée d'embrayage (22) présente des disques de friction côté menant (26) et la partie de sortie d'embrayage (28) présente des disques de friction côté mené (32) et l'élément de piston (36) est déplaçable en direction du boîtier d'embrayage côté entraînement (14) pour l'actionnement des disques de friction (26, 32), dans lequel un élément de paroi (18) est disposé à proximité du dispositif de friction (20) et les disques de friction (26, 32) sont disposés axialement entre l'élément de paroi (18) et le boîtier d'embrayage (14), dans lequel l'élément de paroi (18) forme une limitation d'une chambre de pression (38) pour le déplacement dépendant de la pression de l'élément de piston (36) pour l'actionnement des disques de friction (26, 32), **caractérisé en ce que** l'élément de paroi (18) est assemblé sans rotation au boîtier d'embrayage (14).

2. Dispositif de transmission de couple (10) selon la revendication 1, dans lequel un périmètre radialement le plus extérieur de l'élément d'accumulation d'énergie (54) est situé radialement plus loin ou au même niveau que le périmètre radialement le plus extérieur de la masse d'atténuation (68).

3. Dispositif de transmission de couple (10) selon une des revendications 1 ou 2, dans lequel le support de masse d'atténuation (62, 64) est assemblé sans rotation à la partie d'entrée d'amortisseur (50) ou est réalisé en une seule pièce avec celle-ci.

4. Dispositif de transmission de couple (10) selon une des revendications 1 ou 2, dans lequel le support de masse d'atténuation (62, 64) est assemblé sans rotation à la partie de sortie d'amortisseur (56) ou est réalisé en une seule pièce avec celle-ci.

5. Dispositif de transmission de couple (10) selon l'une quelconque des revendications 1 à 4, dans lequel la partie de sortie d'amortisseur peut être assemblée sans rotation à un moyeu de sortie ou peut tourner de façon limitée par rapport à une autre partie de sortie d'amortisseur par l'action d'un autre élément d'accumulation d'énergie avec formation d'un autre étage d'amortisseur.

6. Dispositif de transmission de couple (10) selon l'une quelconque des revendications précédentes, dans lequel le dispositif d'atténuation (66) est constitué par un dispositif pendulaire centrifuge (66) et de ce fait le support de masse d'atténuation (62) est réalisé en tant que support de masse pendulaire (64) et la masse d'atténuation est réalisée sous la forme de masses pendulaires (68) disposées de part et d'autre sur le support de masses pendulaires (64) et déplaçables par rapport à celui-ci.

7. Dispositif de transmission de couple (10) selon la revendication 6, dans lequel les masses pendulaires (68) sont reliées l'une à l'autre par des boulons d'écartement (70) traversant le support de masses pendulaires (64) et sont déplaçables de façon limitée le long d'un chemin de mouvement pendulaire par rapport au support de masses pendulaires (64) au moyen d'éléments de roulement logés dans le support de masses pendulaires (64).
